# EUROPÄISCHE PATENTANMELDUNG

(11) **EP 1 057 996 A2**
(43) Veröffentlichungstag der Anmeldung: **06.12.2000**
(21) Anmeldenummer: 00111216.8
(22) Anmeldetag: 25.05.2000
(51) Int. Cl.: F02K 9/34, F02K 7/18, F02K 9/26

(54) **Feststofftriebwerk für eine Staustrahlrakete**

(30) Priorität: 31.05.1999 DE 19924907
(71) Anmelder: DaimlerChrysler AG, 70567 Stuttgart (DE)
(72) Erfinder: Engel, Herbert, 83052 Bruckmühl (DE)

(57) **Zusammenfassung**

Es wird ein Feststofftriebwerk für eine Staustrahlrakete beschrieben, das eine von einem röhrenförmigen Mantel (2) umhüllte Brennkammer (B) und einen der Brennkammer (B) vorgelagerten, von einem röhrenförmigen Mantel (1) umhüllten Gaserzeuger (G) zur Erzeugung eines Brenngases aus einem Festtreibstoff und eine zwischen Gaserzeuger (G) und Brennkammer (B) angeordnete Gasstromregeleinheit (R) zur Regelung des vom Gaserzeuger (G) der Brennkammer (B) zugeführten Brenngasstroms enthält. Erfindungsgemäß enthält das Triebwerk eine die Gasstromregeleinheit (R) beherbergende Mittelsektion (4), welche in einer lasttragenden Verbindung mit dem Brennkammermantel (2) und dem Gaserzeugermantel (1) angeordnet ist und einen den Gaserzeuger (G) abschließenden ersten Druckboden (8) und einen die Brennkammer (B) abschließenden zweiten Druckboden (9) und eine zwischen den Druckböden (8,9) angeordnete, die Gasstromregeleinheit (R) beherbergende und die Druckböden (8,9) abstützende Basisstruktur aufweist.

## Beschreibung

Die Erfindung betrifft ein Feststofftriebwerk für eine Staustrahlrakete nach dem Oberbegriff des Anspruchs 1.

Es sind Feststofftriebwerke für Straustrahlraketen bekannt, die eine von einem röhrenförmigen Mantel umhüllte Brennkammer und einen der Brennkammer vorgelagerten, von einem röhrenförmigen Mantel umhüllten Gaserzeuger zur Erzeugung eines Brenngases aus einem Festtreibstoff aufweisen. Weiterhin ist zwischen Gaserzeuger und Brennkammer eine Gasstromregeleinheit zur Regelung des vom Gaserzeuger der Brennkammer zugeführten Brenngasstroms angeordnet. Hierzu wird z.B. auf DE 85 32 148 verwiesen.

Bei diesen bekannten Feststofftriebwerken sind Gaserzeuger und Brennkammer jeweils geschlossene Druckkessel mit korbförmig gewölbten Böden. Zwischen diesen ist die Gasstromregeleinheit angeordnet. Bei Auftreten einer Verformung der Druckböden von Gaserzeuger und Brennkammer unter dem Einfluß des Innendrucks und der Hitze beim Betrieb des Triebwerks ist die Funktion der Gasstromregeleinheit nachteilig beeinflußt. Die Aufgabe der Erfindung ist es somit ein Feststofftriebwerk für eine Staustrahlrakete anzugeben, bei welcher ein zuverlässiger Betrieb der Gasstromregeleinheit sichergestellt ist.

Diese Aufgabe wird durch das im Anspruch 1 angegebene Feststrofftriebwerk gelöst. Vorteilhafte Weiterbildungen der Erfindung sind in den Unteransprüchen gekennzeichnet. Gemäß der Erfindung ist ein Feststofftriebwerk für eine Staustrahlrakete vorgesehen, das eine von einem röhrenförmigen Mantel umhüllte Brennkammer und einen der Brennkammer vorgelagerten, von einem röhrenförmigen Mantel umhüllten Gaserzeuger zur Erzeugung eines Brenngases aus einem Festtreibstoff und eine zwischen Gaserzeuger und Brennkammer angeordnete Gasstromregeleinheit zur Regelung des vom Gaserzeuger der Brennkammer zugeführten Brenngasstroms enthält. Erfindungsgemäß ist eine die Gasstromregeleinheit enthaltende Mittelsektion vorgesehen, welche in einer lastragenden Verbindung mit dem Brennkammermantel und dem Gaserzeugermantel angeordnet ist und einen den Gaserzeuger abschließenden ersten Druckboden und einen die Brennkammer abschließenden zweiten Druckboden und zwischen den Druckböden eine die Gasstromregeleinheit beherbergende und die Druckböden abstützende Basisstruktur aufweist.

Es ist weiter vorgesehen, daß die Mittelsektion eine von Dichtungselementen gegen den Gaserzeuger und die Brennkammer abgeschlossene druckneutrale Zone enthält, durch welche Meß- und Versorgungleitungen in das Innere der Basisstruktur führen.

Dabei ist die druckneutrale Zone durch die beispielsweise topfförmigen Druckböden und die Mantelstrukturen von Brennkammer und Gaserzeuger begrenzt und z.B. durch Dichtungsringe abgedichtet.

Gemäß einer Ausführungsform der Erfindung ist die Mittelsektion von einem röhrenförmigen Mantelabschnitt umgeben.

Vorzugsweise bildet der Mantelabschnitt ein den Gaserzeugermantel und den Brennkammermantel verbindendes Teil der Mantelstruktur.

Vorzugsweise haben der Gaserzeugermantel, der Mantelabschnitt der Mittelsektion und der Brennkammermantel im wesentlichen den gleichen Durchmesser.

Gemäß einer bevorzugten Ausführungsform der Erfindung ist es vorgesehen, daß die Mantelstrukturen von Gaserzeuger, Brennkammer und Mittelsektion an ihren aneinandergrenzenden Enden ringförmig abgestuft und ineinander geschoben und durch eine lasttragende Verbindung fest miteinander gekoppelt sind.

Bei dieser Ausführungsform ist die lasttragende Verbindung zwischen den Mantelstrukturen vorzugsweise durch ein Keilfedersystem gebildet.

Die an ihren Enden ineinander geschobenen Mantelstrukturen von Gaserzeuger und Brennkammer bilden vorteilhafterweise den Mantelabschnitt der Mittelsektion und sind durch eine lasttragende Verbindung fest miteinander gekoppelt.

Dabei ist vorzugsweise die Mittelsektion zwischen den Mantelstrukturen von Gaserzeuger und Brennkammer durch mit diesen ineinander greifende Schulterringe in Axialrichtung positioniert.

Gemäß einer bevorzugten Ausführungsform der Erfindung ist die Basisstruktur der Mittelsektion durch einen rondenförmigen Grundkörper gebildet, und die Druckböden sind als auf den rondenförmigen Grundkörper aufgesetzte jeweils zylindrische Randverstärkungen aufweisende topfförmige Böden ausgebildet.

Bei der vorgenannten Ausführungsform ist es vorzugsweise vorgesehen, daß die Mantelstrukturen von Gaserzeuger und Brennkammer ringförmig abgestuft ineinander geschoben und durch eine lasttragende Verbindung miteinander verbunden sind und einen die Mittelsektion umgebenden röhrenförmigen Mantelabschnitt bilden, und daß an den Mantelstrukturen von Gaserzeuger und Brennkammer Schulterringe vorgesehen sind, welche die Mittelsektion in Längsrichtung abstützen und fixieren.

Dies ist vorzugsweise dadurch weitergebildet, daß die an den Mantelstrukturen von Gaserzeuger und Brennkammer vorgesehenen Schulterringe sich gegen Schultern abstützen, welche an den topfförmigen Böden der Mittelsektion ausgebildet sind.

Vorzugsweise sind zwischen den zylindrischen Randverstärkungen der topfförmigen Böden und den Mantelstrukturen von Brennkammer und Gaserzeuger umlaufende Dichtungsringe angeordnet, welche einen hermetischen Abschluß bilden.

Gemäß einer sehr vorteilhaften Weiterbildung der Erfindung ist es vorgesehen, daß auf den Druckböden diese gegen thermische Einwirkungen schützende Hitzeschilde vorgesehen sind.

Diese Hitzeschilde bestehen vorzugsweise aus einem thermisch ablativen Material.

Vorteilhafterweise bestehen die ablativen Hitzeschilde aus einem Material auf Silikonbasis. Gemäß einer bevorzugten Ausbildung der Erfindung ist es vorgesehen, daß die Basisstruktur aus einem Material besteht, welches eine geringe Massendichte und eine große spezifische Wärme aufweist.

Vorzugsweise besteht die Basisstruktur aus einem Leichtmetall, insbesondere Aluminium, oder aus hochfester, insbesondere kohlefaserverstärkter Keramik.

Die Druckböden bestehen vorzugsweise aus Stahl oder hochfester, insbesondere kohlefaserverstärkter Keramik.

Gemäß einer bevorzugten Weiterbildung der Erfindung ist es vorgesehen, daß in der Basisstruktur und/oder an den Druckböden Mittel zur Aktivkühlung durch Nutzung der Verdampfungswärme einer Flüssigkeit, insbesondere Wasser vorgesehen sind.

Gemäß einer Ausführungsform der Erfindung ist in der Mittelsektion ein in Längsrichtung des Triebwerks, insbesondere achsparallel verlaufendes Gasleitrohr für den Durchgang des vom Gaserzeuger der Brennkammer zuzuführenden Gasstroms vorgesehen. Das Gasleitrohr kann vorzugsweise aus Molybdän bestehen.

Gemäß einer Alternative kann das Gasleitrohr vorteilhafterweise aus faserverstärkter Keramik bestehen.

Gemäß einer Weiterbildung der Erfindung ist es vorgesehen, daß das Gasleitrohr von einem eine thermische Abschirmung gegenüber dem Inneren der Mittelsektion bildenden Isoliermantel umgeben ist.

Dies kann dadurch weitergebildet sein, daß der Isoliermantel zwischen dem äußeren Umfang des Gasleitrohrs und einer den Isoliermantel umgebenden Stahlbuchse angeordnet ist.

Vorteilhafterweise enthält die Gasstromregeleinheit ein den Durchfluß des Gasstroms durch das Gasleitrohr beeinflussendes Stellglied.

Gemäß einer Ausführungsform der Erfindung ist es vorgesehen, daß die Gasstromregeleinheit einen in der Basisstruktur der Mittelsektion untergebrachten Stellantrieb enthält, der mit dem Stellglied gekoppelt ist, wobei das Stellglied außerhalb der Basisstruktur angeordnet ist und mit einer am Ende des Gasleitrohrs vorgesehenen Regeldüse im Sinne einer Beeinflussung des Gasstroms durch das Gasleitrohr zusammenwirkt.

Vorteilhafterweise ist die Mittelsektion in Form eines Moduls als eine in sich geschlossene Funktionseinheit ausgebildet.

Im folgenden wird ein Ausführungsbeispiel der Erfindung anhand der Zeichnung erläutert.

Es zeigt:

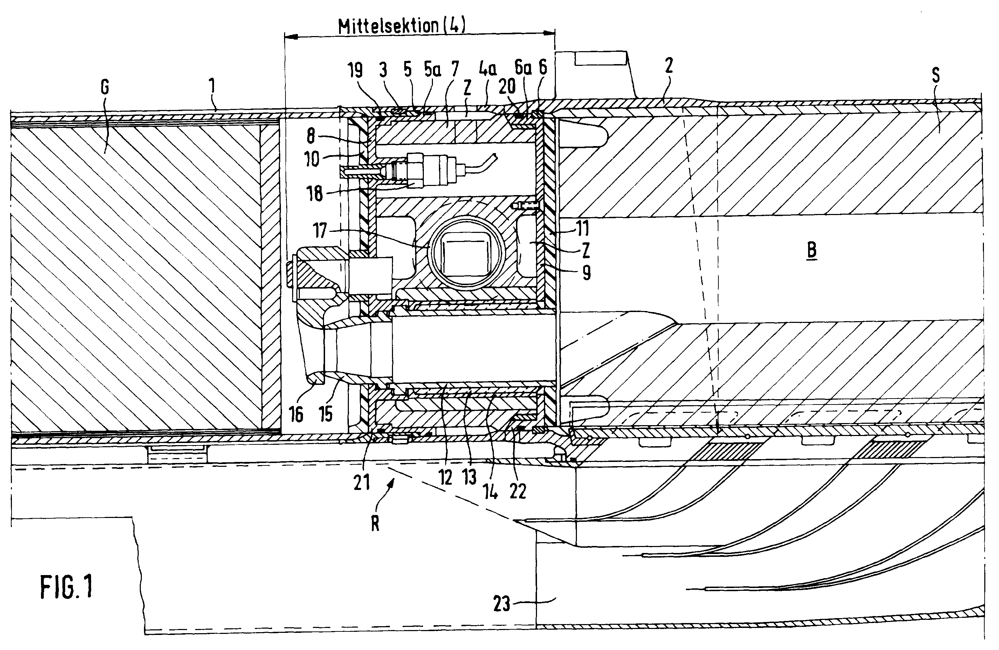

Figur 1 einen Querschnitt durch einen Teil eines Feststofftriebwerks für eine Staustrahlrakete gemäß einem Ausführungsbeispiel der Erfindung.

In Figur 1 ist in der Querschnittsansicht ein Teil eines Feststofftriebwerks für eine Staustrahlrakete gezeigt. Das Triebwerk enthält eine von einem röhrenförmigen Mantel 2 umhüllte Brennkammer B und einen der Brennkammer B vorgelagerten, von einem röhrenförmigen Mantel 1 umhüllten Gaserzeuger G. In der Brennkammer B findet sich ein Starttreibstoff S, mit dem die Brennkammer B anfangs als Starttriebwerk betrieben wird. In dem Gaserzeuger G ist ein Festtreibstoff vorhanden, welcher der Erzeugung eines Brenngases dient, das nach dem Abbrand des Starttreibstoffs S der Brennkammer B zugeführt wird, um dort zusammen mit über Lufteinlässe 23 zugeführter Umgebungsluft verbrannt zu werden. Zwischen dem Gaserzeuger G und der Brennkammer B befindet sich eine Gasstromregeleinheit R zur Regelung des vom Gaserzeuger G der Brennkammer B zugeführten Brenngasstroms.

Die Gasstromregeleinheit R, die ein eine Strömungsverbindung zwischen dem Gaserzeuger G und der Brennkammer B herstellendes Gasleitrohr, eine auf der Seite des Gaserzeugers G an dem Gasleitrohr 12 angeordnete Regeldüse 15, ein mit der Regeldüse 15 im Sinne einer Beeinflussung des Durchflusses des Gasstroms durch das Gasleitrohr 12 zusammenwirkendes Stellglied 16 und einen mit dem Stellglied 16 gekoppelten Stellantrieb 17 umfaßt, ist in einer Mittelsektion 4 untergebracht, die sich zwischen dem Gaserzeuger G und der Brennkammer B befindet. Der Stellantrieb 17 wird in Abhängigkeit von von außen zugeführten Daten und von einem durch einen den im Gaserzeuger G herrschenden Druck erfassenden Drucksensor 18 erzeugten Signal gesteuert.

Die Mittelsektion 4 ist in einer lastragenden Verbindung mit dem Mantel 2 der Brennkammer B und dem Mantel 1 des Gaserzeugers G angeordnet und umfaßt einen den Gaserzeuger G abschließenden ersten Druckboden 8 und einen die Brennkammer B abschließenden zweiten Druckboden 9 sowie eine zwischen diesen beiden Druckböden 8,9 angeordnete Basisstruktur 7, welche die Gasstromregeleinheit R beherbergt. Diese Basisstruktur 7 bildet eine solide Abstützung für die Druckböden 8,9, welche trotz der beim Betrieb in dem Gaserzeuger G und in der Brennkammer B herrschenden Drücke und der entstehenden hohen Temperaturen nicht verformt werden und somit einen zuverlässigen Betrieb der Gasstromregeleinheit R gewährleisten.

Die Mittelsektion 4 ist von einem röhrenförmigen Mantelabschnitt 4a umgeben, welcher den Mantel 1 des Gaserzeugers G und den Mantel 2 der Brennkammer B verbindet. Der Gaserzeugermantel 1, der Mantelabschnitt 4a der Mittelsektion 4 und der Brennkammermantel 2 haben im wesentlichen den gleichen Durchmesser. Der Gaserzeugermantel 1, der Brennkammermantel 2 und der Mantelabschnitt 4a der Mittelsektion 4 sind an ihren aneinandergrenzenden Enden ringförmig abgestuft und ineinander geschoben und durch eine lasttragende Verbindung fest miteinander gekoppelt, die durch ein Keilfedersystem 3 gebildet ist. Der Mantelabschnitt 4a der Mittelsektion 4 ist durch die an ihren Enden ineinander geschobenen Mantelstrukturen 1,2 von Gaserzeuger G und Brennkammer B gebildet. Zwischen den Mantelstrukturen 1,2 von Gaserzeuger und Brennkammer ist die Mittelsektion 4 durch Schulterringe 5,6 in Axialrichtung positioniert, welche mit an dem Brennkammermantel 2 und dem Gaserzeugermantel 1 ausgebildeten Schultern ineinander greifen.

Die Basisstruktur 7 der Mittelsektion 4 ist durch einen rondenförmigen Grundkörper gebildet und die Druckböden 8,9 sind als topfförmige Böden ausgebildet, welche jeweils zylindrische Randverstärkungen 21,22 aufweisen und auf den rondenförmigen Grundkörper der Basisstruktur 7 aufgesetzt sind. An den topfförmigen Böden 8,9 sind Schultern 5a,6a ausgebildet, gegen welche sich die Schulterringe 5,6 von Gaserzeuger G und Brennkammer B abstützen. Zwischen den zylindrischen Randverstärkungen 21,22 der topfförmigen Böden 8,9 und den Mantelstrukturen 1,2 von Brennkammer und Gaserzeuger sind umlaufende Dichtungsringe 19, 20 angeordnet, welche einen hermetischen Abschluß bilden und eine druckneutrale Zone Z begrenzen, durch welche Meß- und Versorungsleitungen in das Innere der Basisstruktur 7 geführt sind.

Auf den Druckböden 8,9 sind diese gegen thermische Einwirkungen schützende Hitzeschilde 10,11 aus einem thermisch ablativen Material auf Silikonbasis vorgesehen.

Die Basisstruktur 7 besteht aus einem Material, welches eine geringe Massendichte und eine große spezifische Wärme aufweist, vorzugsweise einem Leichtmetall, insbesondere Aluminium, oder aus hochfester, insbesondere kohlefaserverstärkter Keramik, wobei eine zusätzliche Aktivkühlung erforderlich wird.

Die Druckböden 8,9 sind aus Stahl, Titan oder hochfester, insbesondere kohlefaserverstärkter Keramik hergestellt.

In der Basisstruktur 7 und/oder an den Druckböden 8,9 können zusätzlich Mittel zur Aktivkühlung durch Nutzung der Verdampfungswärme einer Flüssigkeit, insbesondere Wasser, vorgesehen sein.

Das für den Durchgang des vom Gaserzeuger G der Brennkammer B zuzuführenden Gasstroms vorgesehene Gasleitrohr 12 verläuft in Längsrichtung des Triebwerks achsparallel zur Trieb-werksachse. Das Gasleitrohr 12 besteht aus Molybdän, es kann alternativ auch aus faserverstärkter Keramik hergestellt sein. Damit das Innere der Mittelsektion 4 gegen die Hitze des das Gasleitrohr 12 durchströmenden Brenngases geschützt ist, ist das Gasleitrohr 12 von einem Isoliermantel 13 umgeben, welcher auf dem äußeren Umfang des Gasleitrohrs 12 aufgebracht ist und seinerseits von einer Stahlbuchse 14 eingeschlossen ist.

Das mit der am gaserzeugerseitigen Ende des Gasleitrohrs 12 vorgesehenen Regeldüse 15 zusammenwirkende Stellglied befindet sich außerhalb der Basisstruktur 7 und ist mit dem innerhalb der Basisstruktur 7 untergebrachten Stellantrieb 17 mittels einer den gaserzeugerseitigen ersten Druckboden 8 durchdringenden Welle 24 gekoppelt. Die durch die Basisstruktur 7, die beiden Druckböden 8,9 und die innerhalb der Basisstruktur 7 angeordneten Komponenten wie Gasstromregeleinheit R und Drucksensor 18 gebildete Anordnung ergibt eine in sich geschlossene Funktionseinheit in Form eines Moduls, welches bei der Montage des Feststofftriebwerks mit dem Brennkammermantel 2 und dem Gaserzeugermantel 1 zusammengefügt wird.

### Bezugszeichenliste

- 1: Gaserzeugermantel
- 2: Brennkammermantel
- 3: Keilfederanordnung
- 4: Mittelsektion
- 4a: röhrenförmiger Mantelabschnitt
- 5: Schulterring
- 6: Schulterring
- 7: Basisstruktur
- 8: Druckboden (erster)
- 9: Druckboden (zweiter)
- 10: Hitzeschild
- 11: Hitzeschild
- 12: Gasleitrohr
- 13: Isoliermantel
- 14: Hüllbuchse
- 15: Regeldüse
- 16: Stellglied
- 17: Stellantrieb
- 18: Drucksensor
- 19: Dichtungsring
- 20: Dichtungsring
- 21: zylindrische Randverstärkung
- 22: zylindrische Randverstärkung
- 23: Lufteinlässe
- 24: Welle
- G: Gaserzeuger
- B: Brennkammer
- Z: druckneutrale Zone
- R: Gasstromregeleinheit
- S: Starttreibstoff

## Patentansprüche

1. Feststofftriebwerk für eine Staustrahlrakete, mit einer von einem röhrenförmigen Mantel (2) umhüllten Brennkammer (B) und einem der Brennkammer (B) vorgelagerten, von einem röhrenförmigen Mantel (1) umhüllten Gasgenerator (G) zur Erzeugung eines Brenngases aus einem Festtreibstoff und mit einer zwischen Gaserzeuger (G) und Brennkammer (B) angeordneten Gasstromregeleinheit (R) zur Regelung des vom Gaserzeuger (G) der Brennkammer (B) zugeführten Brenngasstroms mit einer die Gasstromregeleinheit (R) enthaltende Mittelsektion (4), welche in einer lasttragenden Verbindung mit dem Brennkammermantel (2) und dem Gaserzeugermantel (1) angeordnet ist und einen den Gaserzeuger (G) abschließenden ersten Druckboden (8) und einen die Brennkammer (B) abschließenden zweiten Druckboden (9) und zwischen den Druckböden (8,9) eine die Gasstromregeleinheit (R) beherbergende und die Druckböden (8,9) abstützende Basisstruktur (7) aufweist, dadurch gekennzeichnet, daß die Mittelsektion (4) eine von Dichtungselementen (19,20) gegen den Gaserzeuger (G) und die Brennkammer (B) abgeschlossene druckneutrale Zone (Z) enthält, durch welche Meß- und Versorgungsleitungen in das Innere der Basisstruktur (7) führen, wobei die druckneutrale Zone (Z) durch die Druckböden (8,9) und die Mantelstrukturen (1,2) von Brennkammer und Gaserzeuger (19,20) begrenzt ist.

2. Feststofftriebwerk nach Anspruch 1, dadurch gekennzeichnet, daß die Mittelsektion (4) von einem röhrenförmigen Mantelabschnitt (4a) umgeben ist.

3. Feststofftriebwerk nach Anspruch 2, dadurch gekennzeichnet, daß der Mantelabschnitt (4a) ein den Gaserzeugermantel (1) und den Brennkammermantel (2) verbindendes Teil der Mantelstruktur bildet.

4. Feststofftriebwerk nach Anspruch 3, dadurch gekennzeichnet, daß der Gaserzeugermantel (1), der Mantelabschnitt (4a) der Mittelsektion (4) und der Brennkammermantel (2) im wesentlichen den gleichen Durchmesser aufweisen.

5. Feststofftriebwerk nach einem der Ansprüche 1 bis 4, dadurch gekennzeichnet, daß die Mantelstrukturen (1,2,4a) von Gaserzeuger, Brennkammer und Mittelsektion an ihren aneinandergrenzenden Enden ringförmig abgestuft und ineinander geschoben und durch eine lasttragende Verbindung fest miteinander gekoppelt sind.

6. Feststofftriebwerk nach Anspruch 5, dadurch gekennzeichnet, daß die lasttragende Verbindung zwischen den Mantelstrukturen (1,2,4a) durch ein Keilfedersystem (3) gebildet ist.

7. Feststofftriebwerk nach Anspruch 5 oder 6, dadurch gekennzeichnet, daß die an ihren Enden ineinander geschobenen Mantelstrukturen (1,2) von Gaserzeuger und Brennkammer den Mantelabschnitt (4a) der Mittelsektion (4) bilden und durch eine lasttragende Verbindung fest miteinander gekoppelt sind.

8. Feststofftriebwerk nach Anspruch 7, dadurch gekennzeichnet, daß die Mittelsektion (4) zwischen den Mantelstrukturen (1,2) von Gaserzeuger und Brennkammer durch mit diesen ineinander greifende Schulterringe (5,6) in Axialrichtung positioniert ist.

9. Feststofftriebwerk nach einem der Ansprüche 1 bis 8, dadurch gekennzeichnet, daß die Basisstruktur (7) der Mittelsektion (4) durch einen rondenförmigen Grundkörper gebildet ist, und daß die Druckböden (8,9) als auf den rondenförmigen Grundkörper aufgesetzte jeweils zylindrische Randverstärkungen (21,22) aufweisende topfförmige Böden ausgebildet sind.

10. Feststofftriebwerk nach Anspruch 9, dadurch gekennzeichnet, daß die Mantelstrukturen (1,2) von Gaserzeuger und Brennkammer ringförmig abgestuft ineinander geschoben und durch eine lasttragende Verbindung (3) miteinander verbunden sind, und einen die Mittelsektion (4) umgebenden röhrenförmigen Mantelabschnitt (4a) bilden, und daß an den Mantelstrukturen (1,2) von Gaserzeuger und Brennkammer Schulterringe (5,6) vorgesehen sind, welche die Mittelsektion (4) in Längsrichtung abstützen und fixieren.

11. Feststofftriebwerk nach Anspruch 10, dadurch gekennzeichnet, daß die an den Mantelstrukturen (1,2) von Gaserzeuger und Brennkammer vorgesehenen Schulterringe (5,6) sich gegen Schultern (5a,6a) abstützen, welche an den topfförmigen Böden (8,9) der Mittelsektion (4) ausgebildet sind.

12. Feststofftriebwerk nach einem der Ansprüche 9 bis 11, dadurch gekennzeichnet, daß zwischen den zylindrischen Randverstärkungen (21,22) der topfförmigen Böden (8,9) und den Mantelstrukturen (1,2) von Brennkammer und Gaserzeuger umlaufende Dichtungsringe (19,22) angeordnet sind, welche einen hermetischen Abschluß bilden.

13. Feststofftriebwerk nach einem der Ansprüche 1 bis 12, dadurch gekennzeichnet, daß auf den Druckböden (8,9) diese gegen thermische Einwirkungen schützende Hitzeschilde (10,11) vorgesehen sind.

14. Feststrofftriebwerk nach Anspruch 13, dadurch gekennzeichnet, daß die Hitzeschilde (10,11) aus einem thermisch ablativen Material bestehen.

15. Feststofftriebwerk nach Anspruch 14, dadurch gekennzeichnet, daß die ablativen Hitzeschilde (10,11) aus einem Material auf Silikonbasis bestehen.

16. Feststofftriebwerk nach einem der Ansprüche 1 bis 15, dadurch gekennzeichnet, daß die Basisstruktur (7) aus einem Material besteht, welches eine geringe Massendichte und eine große spezifische Wärme aufweist.

17. Feststofftriebwerk nach Anspruch 16, dadurch gekennzeichnet, daß die Basisstruktur (7) aus einem Leichtmetall, insbesondere Aluminium, oder aus hochfester, insbesondere kohlefaserverstärkter Keramik besteht.

18. Feststofftriebwerk nach einem der Ansprüche 1 bis 17, dadurch gekennzeichnet, daß die Druckböden (8,9) aus Stahl oder hochfester, insbesondere kohlefaserverstärkter Keramik bestehen.

19. Feststofftriebwerk nach einem der Ansprüche 1 bis 18, dadurch gekennzeichnet, daß in der Basisstruktur (7) und/oder an den Druckböden (8,9) Mittel zur Aktivkühlung durch Nutzung der Verdampfungswärme einer Flüssigkeit, insbesondere Wasser, vorgesehen sind.

20. Feststofftriebwerk nach einem der Ansprüche 1 bis 19, dadurch gekennzeichnet, daß in der Mittelsektion (4) ein in Längsrichtung des Triebwerks, insbesondere achsparallel verlaufendes Gasleitrohr (12) für den Durchgang des vom Gaserzeuger (G) der Brennkammer (B) zuzuführenden Gasstroms vorgesehen ist.

21. Feststofftriebwerk nach Anspruch 20, dadurch gekennzeichnet, daß das Gasleitrohr (12) aus Molybdän besteht.

22. Feststofftriebwerk nach Anspruch 20, dadurch gekennzeichnet, daß das Gasleitrohr (12) aus faserverstärkter Keramik besteht.

23. Feststofftriebwerk nach Anspruch 20, 21 oder 22, dadurch gekennzeichnet, daß das Gasleitrohr (12) von einem eine thermische Abschirmung gegenüber dem Inneren der Mittelsektion (4) bildenden Isoliermantel (13) umgeben ist.

24. Feststofftriebwerk nach Anspruch 23, dadurch gekennzeichnet, daß der Isoliermantel (13) zwischen dem äußeren Umfang des Gasleitrohrs (12) und einer den Isoliermantel (13) umgebenden Stahlbuchse (14) angeordnet ist.

25. Feststofftriebwerk nach einem der Ansprüche 20 bis 24, dadurch gekennzeichnet, daß die Gasstromregeleinheit (R) ein den Durchfluß des Gasstroms durch das Gasleitrohr (12) beeinflussendes Stellglied (16) enthält.

26. Feststofftriebwerk nach Anspruch 25, dadurch gekennzeichnet, daß die Gasstromregeteinheit (R) einen in der Basisstruktur (7) der Mittelsektion (4) untergebrachten Stellantrieb (17) enthält, der mit dem Stellglied (16) gekoppelt ist, wobei das Stellglied (16) außerhalb der Basisstruktur (7) angeordnet ist und mit einer am Ende des Gasleitrohrs (12) vorgesehenen Regeldüse (15) im Sinne einer Beeinflussung des Gasstroms durch das Gasleitrohr (12) zusammenwirkt.

27. Feststofftriebwerk nach einem der Ansprüche 1 bis 26, dadurch gekennzeichnet, daß die Mittelsektion (4) in Form eines Moduls als eine in sich geschlossene Funktionseinheit ausgebildet ist.
